# EUROPEAN PATENT SPECIFICATION

(11) **EP 2 969 491 B1**
(45) Date of publication and mention of the grant of the patent: **02.11.2022**
(21) Application number: 13819131.7
(22) Date of filing: 18.12.2013
(51) Int. Cl.: B29C 70/32, B29C 70/52, B29C 70/70, B29C 53/60, H02K 1/18, H02K 5/04, H02K 5/08, H02K 5/18, H02K 15/14

(54) **COMPOSITE FRAME FOR ELECTRICAL MACHINES AND METHODS FOR MAKING SAME**
ZUSAMMENGESETZTER RAHMEN FÜR ELEKTRISCHE MASCHINEN UND VERFAHREN ZUR HERSTELLUNG DAVON
CADRE COMPOSITE DESTINÉ À DES MACHINES ÉLECTRIQUES ET SES PROCÉDÉS DE FABRICATION

(30) Priority: 14.03.2013 US 201361784187 P
(43) Date of publication of application: 20.01.2016
(73) Proprietor: ABB Schweiz AG, 5400 Baden (CH)
(72) Inventor: TREMELLING, Darren, Dale, Apex, North Carolina 27502 (US); KIM, Hongrae, Cary, NC 27519 (US); VELTHUIS, Rudi, 79787 Lauchringen (DE); ZANT, Nikolaus, Raleigh, North Carolina 27604 (US); SCHNEIDER, Marco, CH-5303 Würenlingen (CH); SHRESTHA, Ghanshyam, Apex, NC 27523 (US)
(74) Representative: Gregorj S.r.l.
(86) International application number: PCT/US2013/076167
(87) International publication number: WO 2014/158260

(56) References cited:
- EP-A1- 0 268 085
- EP-A1- 2 497 625
- DE-C1- 3 823 113
- GB-A- 2 194 104
- US-A- 5 305 601

## Description

### TECHNICAL FIELD

The subject matter described herein relates to an electrical machine comprising a composite frame, wherein the electrical machine comprises a motor or a generator including a stator and to a method for making a stator with a composite frame for an electrical machine.

### BACKGROUND

It is common for the electromagnetically active portions of an electrical machine to be encased in a frame. The frame provides strength and stability to the stator, rotor, and other stationary portions of the electrical machine. The materials commonly used for the frame are steel and aluminum. Frames are commonly cast for smaller sized machines or fabricated for physically larger machines. Therefore, the frames for larger machines are created by cutting and welding of steel bar and plate materials as disclosed in GB 2 194 104 A.

Material and manpower costs for the manufacture of these frames are high. Also, these frames, due to their electrically conductive nature, and due to welding, allow for currents to flow through the frame. These conductive structures may complete a circuit, which allows the currents to circulate, potentially creating damage to the bearings of electrical machines and other coupled components. These currents are known as bearing currents and are most troublesome in converter-fed machines, which are connected to power electronic switches, which do not supply the machine with sinuous excitations. Due to capacitive coupling between the winding and stator in particular, currents are created. Also, there may be a desire to allow the entire winding assembly of the machine to electrically float above the local ground potential. This floating characteristic cannot be obtained with known technology.

Accordingly, in light of these difficulties, there exists a long felt need for an improved frame structure for electrical machines.

A known method for producing a composite frame frame for an electrical machine is disclosed in document DE 38 23 113 C1.

### SUMMARY

The invention relates to an electrical machine comprising a composite frame according to claim 1 and to a method for making a stator with a composite frame for an electrical machine according to claim 12.

At least some aspects of the subject matter described herein, such as control over composite frame manufacturing processes, can be implemented in software in combination with hardware and/or firmware. For example, the subject matter described herein can be implemented in software executed by a processor. In one exemplary implementation, the subject matter described herein can be implemented using a non-transitory computer readable medium having stored thereon computer executable instructions that when executed by the processor of a computer control the computer to perform steps. Exemplary computer readable media suitable for implementing the subject matter described herein include non-transitory computer-readable media, such as disk memory devices, chip memory devices, programmable logic devices, and application specific integrated circuits. In addition, a computer readable medium that implements the subject matter described herein may be located on a single device or computing platform or may be distributed across multiple devices or computing platforms.

### BRIEF DESCRIPTION OF THE DRAWINGS

Figure 1 is a perspective view shown in partial transparency of a composite frame for an electrical machine;
Figure 2 is an end view of a composite frame for an electrical machine;
Figure 3 is a side view of a mandrel for manufacturing a composite frame for an electrical machine;
Figure 4 is an end view of the mandrel of Figure 3 illustrating outer teeth on the stator lamination for bonding the stator to the composite frame and inner teeth for holding windings of the stator core;
Figure 5 is an end view of stator laminations illustrating inner and outer teeth shown without the mandrel ends of Figures 3 and 4;
Figure 6 is a flow chart illustrating exemplary steps for manufacturing a composite frame for an electrical machine;
Figure 7 is a side view illustrating the filament winding of fibers around the mandrel of Figure 3 for making a composite frame of an electrical machine;
Figure 8 is a schematic diagram of an exemplary pultrusion process suitable for manufacturing a composite frame for an electrical machine according to an embodiment not forming part of the invention;
Figure 9 is a block diagram illustrating a composite frame for an electrical machine coupled to a mechanical system;
Figures 10A-10C are sectional end views of frame members with different outer and inner diameter configurations; and
Figures 11A-11D are sectional side views of frame members with different configurations.

### DETAILED DESCRIPTION

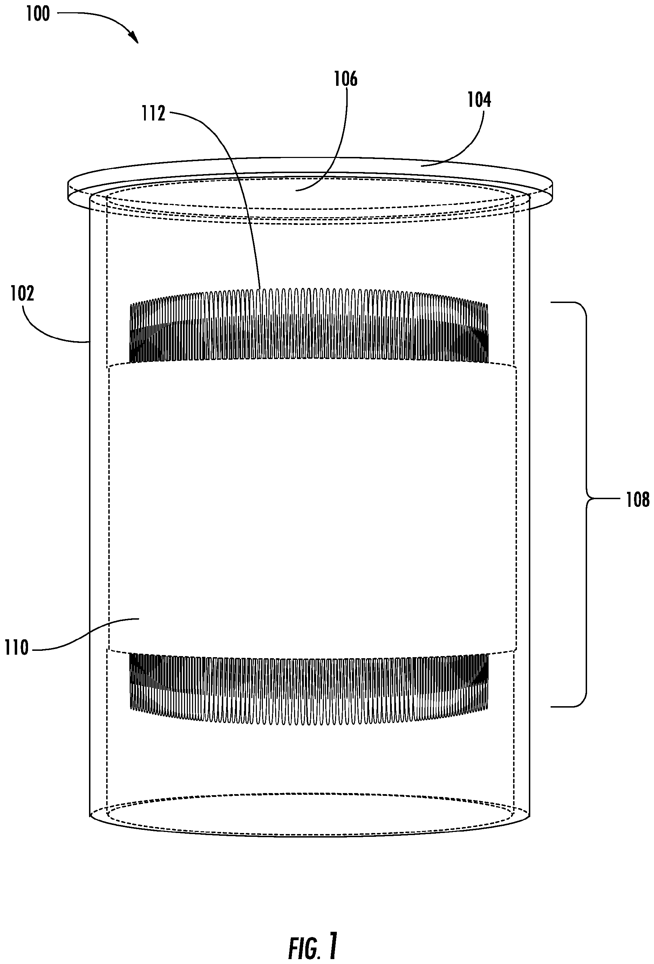

A composite frame for an electrical machine and methods for making such frames are described herein. Figure 1 is a perspective view shown with partial transparency of a composite frame for an electrical machine. Referring to Figure 1, frame **100** includes an outer frame member **102** having a flange **104** for attaching to an electrical machine. Outer frame member **102** may be formed of filament wound or pultruded fibers, extrusion, resin transfer molding or vacuum infusion may be utilized. The fibers are long fibers, i.e., having an aspect ratio of at least about 1500. The fibers are preferably formed of a polymeric matrix base and non-electrically conductive fibers. The fibers may include glass, aramid, carbon or basalt fibers. Carbon fibers are electrically conductive, so that an electrically insulating veil layer of fibers may be used between the electrically conductive carbon fibers and that of the stator laminations. In one example, wet filament winding and the use of pre-pregnated tapes are preferred methods of fabrication. Dry winding and impregnation of this assembly may also be used. Long fibers are preferred, as long fibers will allow greater stiffness and strength of the structure, being more comparable to traditional steel and aluminum type frames or housings, relative to the strength and stiffnesses possible with short fiber composites. The use of long fibers also allows for tailoring of the strength and stiffnesses of the frame or housing depending upon the lateral and torsional stiffness requirements of the motor application.

In the illustrated example, outer frame member **102** forms a central aperture **106** for holding an electrical machine **108.** Electrical machine **108** may be any suitable electrical machine operating as a motor or generator, and of type permanent magnet or wound field synchronous, either cage or wound rotor induction, or of synchronous or switched reluctance. In one example, electrical machine **108** comprises a generator, such as a generator for a wind turbine or for a sub-sea application. In an alternate example, electrical machine **108** may be a motor, such as a motor for a mixer in a food processing application. According to the invention, electrical machine **108** includes stator laminations **110** and stator windings **112.** It should be noted that frame member **102** extends axially beyond the end windings (i.e., those windings that are most axially spaced from the axial center of the electrical machine) of electrical machine **108.** According to the invention, electrical machine **108** serves as a portion of the mandrel used for the filament winding process used for making frame **100.** Alternatively, in an embodiment of the method for making a stator with a composite frame for an electrical machine not covered by the appended claims, mandrel separate from the electrical machine **108** may be used. If pultrusion is used to form frame 100, which method of production is not covered by the appended claims, electrical machine **108** may serve as at least a portion of the mold around which fibers are pulled during the pultrusion process. In an alternate example no covered by the appended claims, a mold separate from electrical machine **108** may be used for forming frame **100.**

If filament winding is used, according to an embodiment of the method of production not covered by the appended claims, **100** may be wound to give the appropriate torsional and lateral stiffnesses and strengths required of frame **108.** After winding, curing, and removing from the mandrel, frame **100** may be cut to length, and the electrical machine **108** may be installed, for example, by shrink or pressure fitting, alternatively, the frame may be deformed by some outside structure so that placement of the stator assembly may be done without damage to housing fibers. The length and diameter of frame **100** may be determined by dielectric, as well as lateral and torsional structural requirements of the application. The ends of composite frame **100** may be bolted or bonded to other frame materials, such as metals or other composite parts, being of either ceramic, metallic or polymeric composites. It may also be possible for frame **100** to serve as a container for cooling fluids, isolating the cooling fluids from the external environment, as well as to allow for placement of converters with dielectric requirements away from electrically conductive materials. The fastening of machine **108** to frame **100** may be accomplished in any suitable manner, including adhesive bonding, mechanical fasteners, through intermediate members, such as flanges, or through mechanical interference through geometric facets in the mating surfaces of the frame and stator.

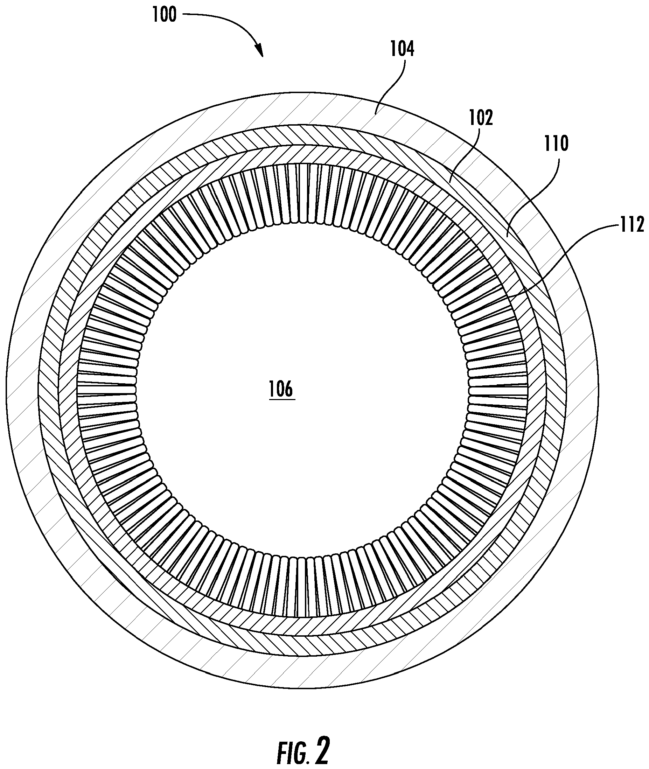

Figure 2 is an end view of frame **100.** Flange **104** is the outermost circle illustrated in Figure 2. Frame member **102** forms the outermost layer of frame **100** in the portion of frame **100** that surrounds the electrical machine. Stator laminations **110** form the next layer, followed by stator windings **112.** Central aperture **106** may be structured to receive the rotating portion of the electrical machine, such as a rotor assembly.

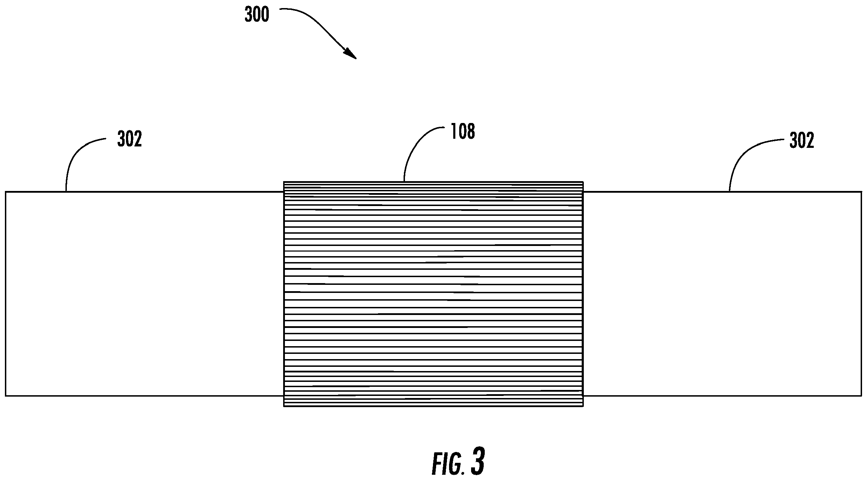

According to the method of production of the invention, wherein electrical machine **108** is used as part of the mandrel, a hybrid assembly method includes the use of mandrels which are separated by the machine stator. Figure 3 illustrates a hybrid mandrel **300** suitable for this purpose. In Figure 3, electrical machine **108,** which comprises a stator, is located between separated mandrels **302.** Shrink fitting of the stator into the frame is not required because the frame fibers can be filament wound around electrical machine **108** during the filament winding process. The filament winding may occur across mandrels **302** and across electrical machine stator **108,** or rotor, if the machine is of outer rotor construction. The filament winding may be performed such that the frame has a constant outer diameter. It may be also be desirable to make each of the ends of mandrels **302** in a bell shape to form a flange or other structure for attachment to a mechanical system. It may also be needed, from a cost and weight minimization perspective, to attach a number of axially oriented fibers about the outer diameter of the frame. The axially oriented fibers may be attached to the frame in any suitable manner, preferably through adhesive attachment, with the time of the placement being either before or after curing of the overall assembly. Provisions for bearing supports may also be included in the frame.

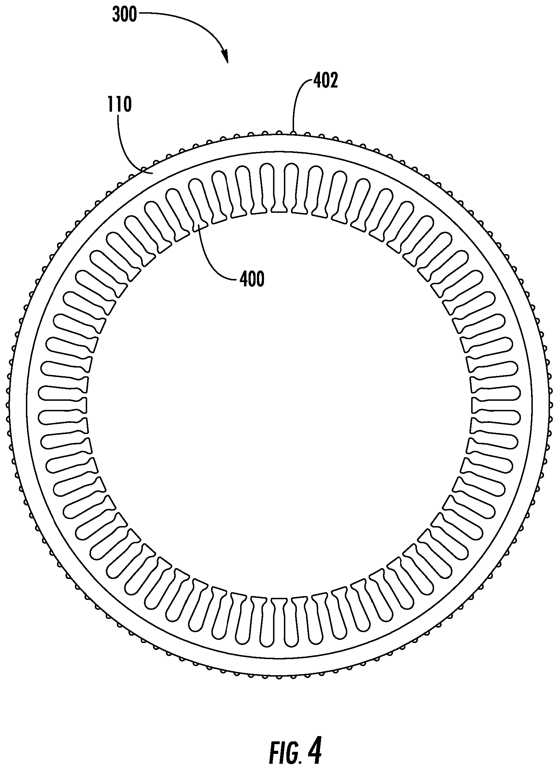

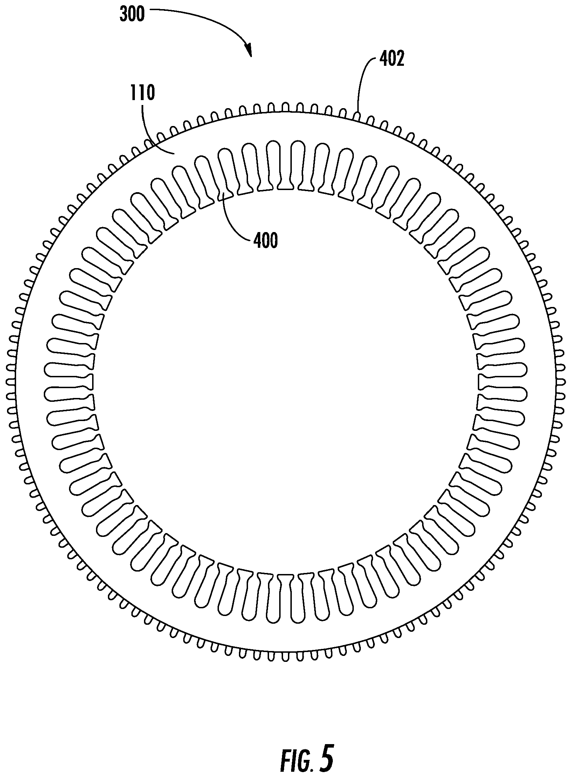

Figure 4 is an end view of mandrel **300.** In Figure 4, inner teeth **400** that form the structure for stator windings of electrical machine **108** are illustrated. Stator laminations **110** are visible and surround the central portion of mandrel **300** as illustrated in Figure 3. Outer teeth **402** are formed on the outer circumference of stator laminations **110** to facilitate bonding or attachment with composite frame **100.** Figure 5 is an end view of stator laminations **110** and inner and outer teeth **400** and **402** shown without mandrel portion **302.** These outer teeth may be skewed, and also spaced in axial direction so as to better bind the frame to laminations, as well as utilize the typically squared off portion of the steel from which the lamination is punched or cut.

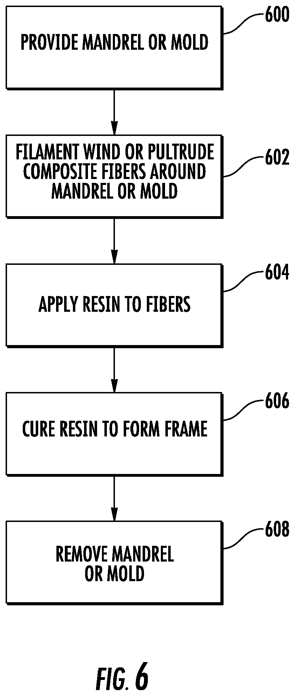

Figure 6 is a flow chart illustrating exemplary steps for forming a frame for an electrical machine: the method of production of the invention uses the electrical machine as mandrel. The other embodiments of the method of production described hereafter are not covered by the appended claims. Referring to Figure 6, in step **600,** a mandrel or mold is provided. According to the invention, as illustrated in Figure 3, a mandrel that includes the electrical machine **108** is provided. In an alternate example not covered by the appended claims, a mandrel that is separate from the electrical machine may be used. The mandrel typically includes a machined largely cylindrical structure about which fibers can be circumferentially wound. If pultrusion is used, which method is not covered by the appended claims, fibers and or fabrics may be pulled axially to surround a mold in the axial direction. The mold may be similar to the mandrel illustrated in Figure 3 and may include a portion of the electrical machine. Alternatively, the mold used in the pultrusion may be separate from the electrical machine.

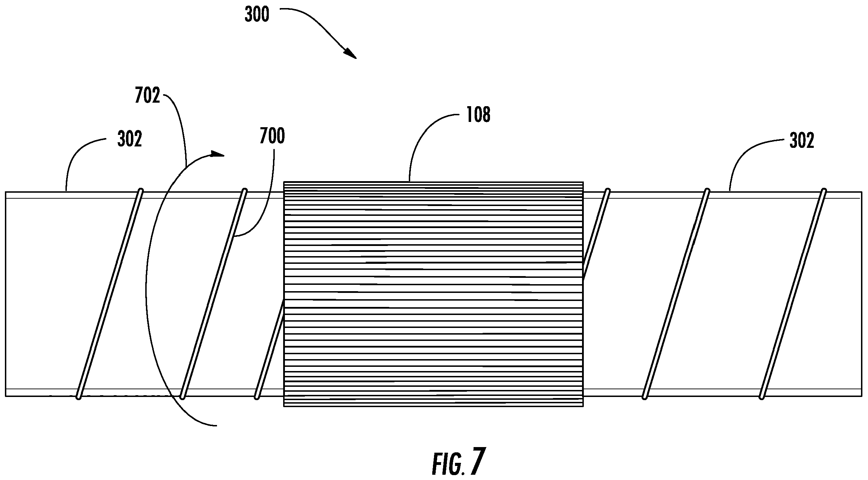

In step **602,** fibers are filament wound around the mandrel or pultruded through the mold. In Figure 7, according to the invention, the fibers **700** are circumferentially wound around electrical machine **108** and around separated mandrels **302** in a direction illustrated by arrow **702.** Fibers **700** are circumferentially wound until they substantially cover the outer surface of the mandrel portions **302** and electrical machine **108.**

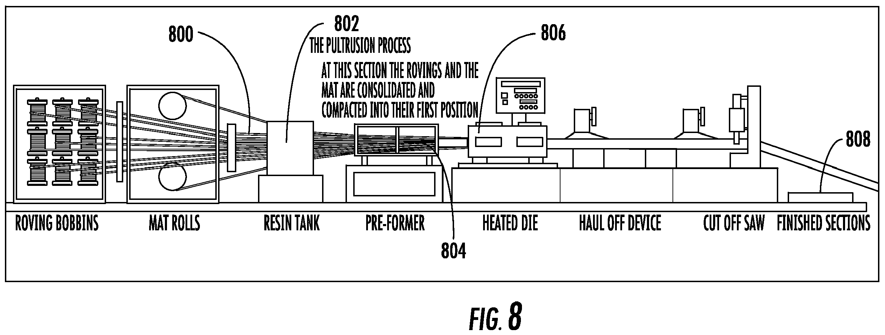

Figure 8 illustrates an example of the pultrusion process not covered by the appended claims. In Figure 8, fibers **800** are pulled through a resin tank **802** to apply resin to the fibers and then around a preform or mold **804.** The resin coated fibers are then cured in the mold **806** and pulled and then cut to form finished sections **808.** As illustrated in Figure 8, fibers are pultruded so that they extend in the axial direction with respect to the axis of perform **804** and ultimately in composite frame **100,** the fibers can also be braided before entry into the mold, so that the mechanical characteristics of the resultant structure are better defined than with a simple pultusion process.

Returning to Figure 6, in step **604,** resin is applied to the fibers. The resin may be applied before or after the winding or pultrusion process. In step **606,** the resin is cured to form the frame. Curing may occur in an oven or other suitable environment. In step **608,** if the mandrel is separate from the electrical machine, the mandrel is removed.

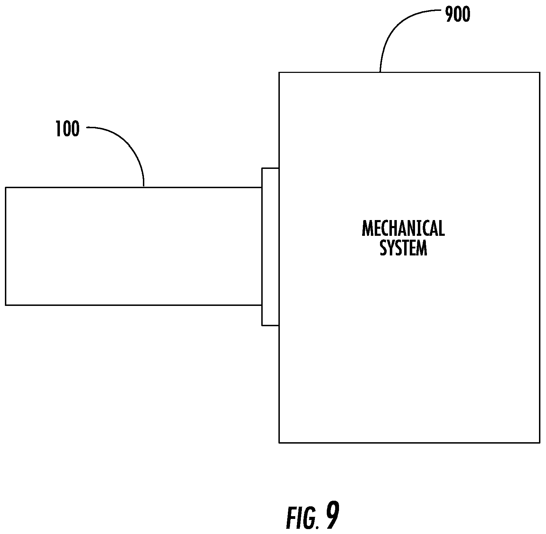

Figure 9 is a block diagram of an application for composite frame **100.** In Figure 9, composite frame **100** is bolted to or otherwise attached to a mechanical system **900.** Mechanical system **900** may be a wind turbine or a gear box associated with a wind turbine in power applications. In an alternate example, composite frame **100** may enclose a motor and mechanical system **900** may be a mixer driven by the motor for mixing food. In yet another implementation, composite frame may house a generator or motor for sub-sea applications.

Advantages of a composite wound or pultruded frame for an electrical machine include low cost material usage due to composite material costs, low cost manufacturing, light weight frame assembly due to low density of materials, desirable dielectric properties if dielectric materials are used, reduction of radiated noise due to the unfocused surface of the material and the damping properties of polymers, and ease in transport due to light weight.

In wind generators, as in industrial motors, much material is used for the construction of the frame of the machine. By creating a cylindrical frame formed of a lightweight composite material that provides the same function as the cut and welded steel plates, the subject matter described herein provides a low cost advantage to the cutting and welding of plates and requires less manufacturing time and quality control time. The use of filament wound pultruded, or composite frames being manufactured through previously noted methods allows for material, time, and cost effective manufacture of structural frames. The use of glass, basalt, boron, or aramid fibers allows for dielectric insulation between the electrical machine that is supported by the frame to that of the conventional mounting media, commonly the gear box of the wind generator. As the surface of the filament wound tube is not planar, the displacement of the frame may not create significant and geometrically concentrated pressure waves, which commonly result in significant noise. The tubular form of the frame provides a lightweight small package compared to conventional frame use in the generator field. Also, the reduction in weight may reduce the size of other component sizing in wind turbines, which may allow for further reduction in system costs.

As may be understood, the mechanical properties of the frame, when fabricated at least partially from a fiber-reinforced composite material, may be selected, tuned or adjusted by using suitable combinations of fiber orientations. In particular, inclusion of fibers that are more closely parallel to the axis of the frame, or are substantially axially aligned, may provide or improve lateral stiffness or bending resistance, inclusion of fibers that are obliquely oriented or skew with respect to the axis of the frame, or off-axis, may provide or improve torsional stiffness, while inclusion of fibers that are more closely circumferentially oriented or transverse to the axis of the frame may provide or improve the frame's hoop strength or resistance to lateral compression or buckling. By way of a nonexclusive illustrative example, fibers may be considered to be: substantially axially aligned when the fibers are oriented at an angle of less than about plus or minus ten degrees (±10°) relative to a line parallel to the axis of the frame, obliquely or helically oriented or skew when the fibers are oriented at an angle of between about plus or minus ten degrees (±10°) and about plus or minus eighty degrees (±80°) relative to a line parallel to the axis of the frame, and circumferentially oriented or transverse when the fibers are oriented at an angle of between about plus or minus eighty degrees (±80°) and about ninety degrees (90°) relative to a line parallel to the axis of the frame. In some nonexclusive illustrative examples, the frame may include a suitable combination of: fibers that are substantially axially-aligned or at approximately zero degrees (0°) relative to a line parallel to the axis of the frame, fibers that are oriented or wrapped at an angle of about plus or minus forty-five degrees (±45°) relative to a line parallel to the axis of the frame, and/or fibers that are oriented or wrapped at an angle of about ninety degrees (90°) relative to a line parallel to the axis of the frame.

Exemplary modifications include the use of different materials for forming the frame, and different fiber layouts and directions. For example, the fibers may be oriented off axis, such as plus or minus 30 degrees or plus or minus 45 degrees of the axis of the electrical machine that the composite frame encloses. Braided-pultrusion may be used to orient fibers in off axis directions. Additional modifications to the subject matter described herein include the incorporation of non-composite materials within composite frames. For example, non-composite materials may be incorporated within the composite frame to increase its structural integrity. An additional modification of the subject matter described herein includes additional manners of connection to the electrical machine's stator. For example, as described above, the stator may include outer teeth or fins that facilitate bonding with the filament wound or pultruded fibers. In an alternate example, other structures may be formed on the stator for attachment to the composite frame. For example, the stator may include bolts or other protrusions that facilitate its attachment to the frame. Yet another modification of the subject matter described herein includes the application of protective coatings, such as paint or resin coatings to the exterior surface of the composite frame. Yet another potential modification of the subject matter described herein includes the location and fixturing of rotor bearings and supports within the composite frame. Yet another modification of the subject matter described herein includes the connection or incorporation of stiffening beams to the outer diameter of the composite frame. A further modification may include stiffening beams attached to or incorporated to the inner diameter of the composite frame, which allows axial flow of fluids about the stator and outer surface of the stator.

The use of long fibers in the frame allow for achieving required stiffnesses and strength with reduced wall thickness of the housing compared to that of an injection molded type housing. This reduction in wall thickness reduces the thermal resistance through the housing, and reduced temperature rises. The use of thermally conductive fillers in the composite also allows for reduced temperature rises in the machine. It is often preferred to have machines that are constructed in manners to limit the ingress of materials in the environment to the machine, and vice versa. This ingress protection often precludes the use of ventilation holes or ducts, which would allow for fouling of the machine surfaces. Thus, the use of long fibers and thermally conductive fillers in the composite allow for greater thermal performance of composite, approaching that of the traditional metallic housing or frame, which has not been possible previously with composite housings.

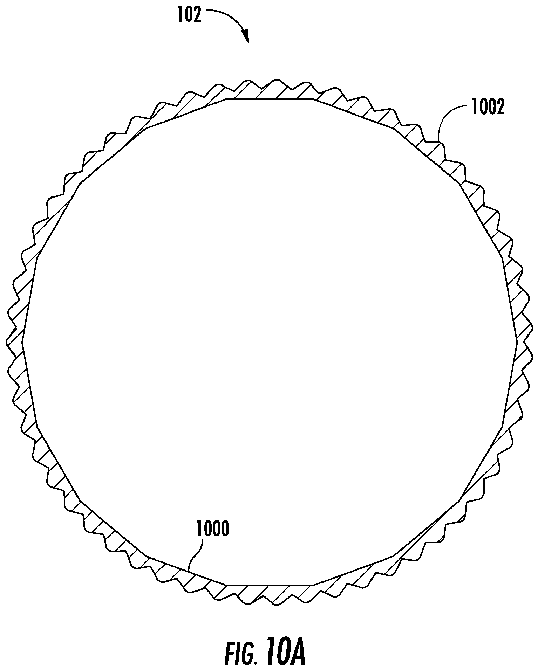

The composite frame may also be used as a chamber for VPI or dip and bake type processes, which is typically used to increase the thermal and structural capabilities of the windings. Previously, a separate chamber is utilized for immersion of the stator assembly before installation into a conventional frame. To facilitate attachment with the stator assembly, outer frame member **102** may include facets located on an inner diameter of frame member **102** for mechanical locking of the stator into the frame or mechanical locking of the frame after being wound around the stator. Figure 10A is a sectional end view (i.e., a view taken by passing a plane perpendicular to the axis of rotation of the electrical machine through frame member **102** and looking in the direction of the axis of rotation) of frame member **102** with facets **1000** located on the inner diameter of frame member **102.** In Figure 10A, facets **1000** are circumferentially spaced about the inner diameter of frame member **1000** such that when viewed in cross section, the inner diameter of frame member **102** forms a regular polygon of n sides, where n is an integer that depends on the width of the facets and the angle between the facets. In Figure 10A, eighteen facets are shown. However, any number of facets is intended to be within the scope of the subject matter described herein. Frame member **102** also includes fins or teeth located on the outer diameter of frame member **102** to facilitate heat dissipation and to enhance structural capabilities of frame member **102.**

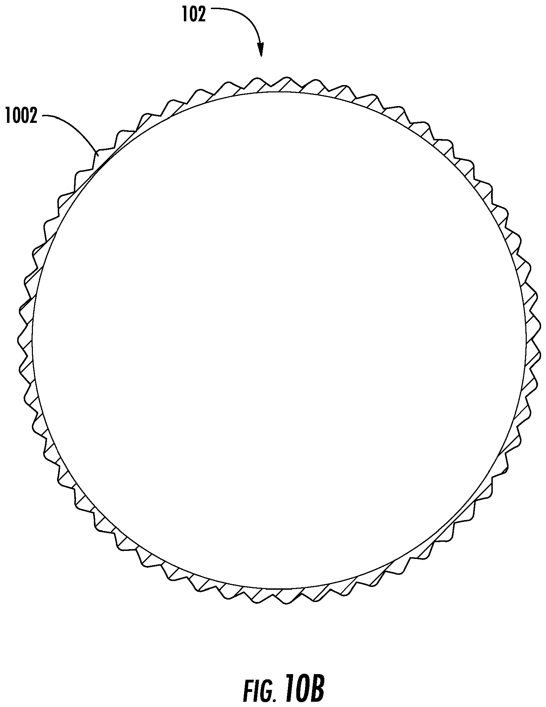

Figure 10B is a sectional end view of frame member **102** with teeth or fins located on the outer diameter and a cylindrical inner diameter. Referring to Figure 10B, frame member **102** includes fins **1002** located on its outer diameter. As stated above, fins **1002** provide enhanced heat dissipation and structural support for frame member **102.** The inner diameter of frame member **102** is cylindrical for enclosing a stator with a cylindrical outer diameter.

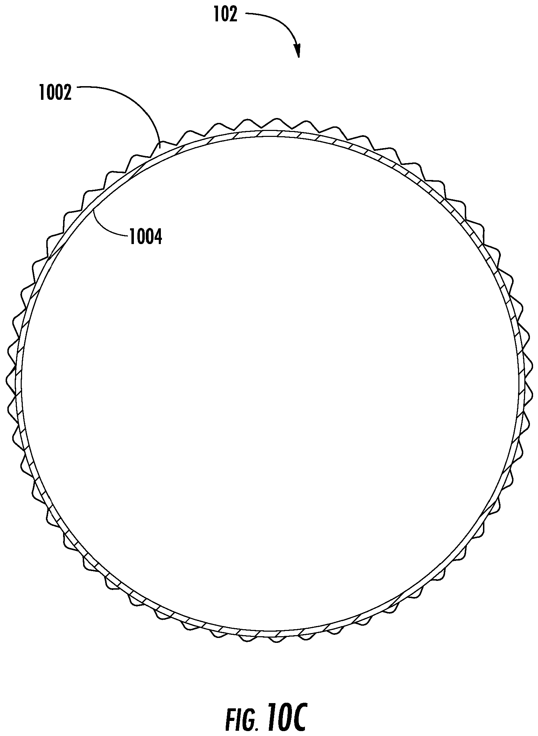

Figure 10C is a sectional end view of another embodiment of frame member **102.** In Figure 10C, the outer diameter of frame member **102** includes fins **1002** and the inner diameter is smooth. In addition, the outer and inner diameters of frame member **102** may be made of different materials or fiber orientations. In one implementation, the inner diameter may be made of a fiber orientation or material that is optimized for optimized for torsion and thermal conductivity, and the outer diameter may be formed of materials or fiber orientations that are optimized for lateral stiffness.

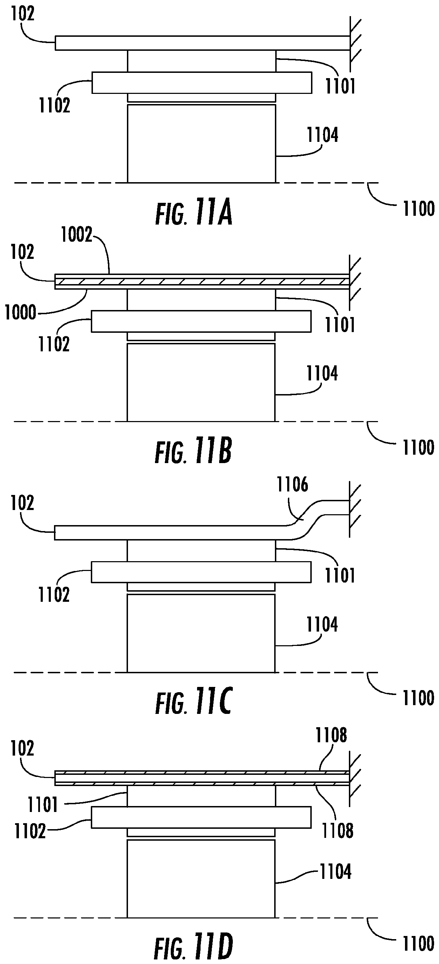

Figure 11A is a sectional side view of one quadrant of a frame member and components of an electrical machine where the electrical machine has a cylindrical outer diameter and the frame member has a cylindrical inner diameter. Referring to Figure 11A, dashed line **1100** represents the axis of rotation of the electrical machine such that the view in Figure 11A is a sectional view taken by passing a plane parallel to the axis of rotation and looking radially into the electrical machine and the frame. In Figure 11A, frame member **102** includes cylindrical outer and inner diameters. Frame member **102** surrounds stator laminations **1101,** which have a cylindrical outer diameter. Stator windings **1102** and rotor **1104** are also shown for completeness.

Figure 11B illustrates a sectional side view of an alternate embodiment of frame member where frame member **102** includes a facetted inner diameter and a finned outer diameter. In Figure 11B, the outer diameter of frame member **102** includes fins **1002.** The inner diameter of frame member **102** includes facets **1000,** which may be structured the same as facets **1000** illustrated in Figure 10A. The inner and outer diameters of frame member **102** may be of the same or different materials or fiber orientations as described above.

Figure 11C illustrates a sectional side view of another embodiment of frame member **102** where frame member **102** includes a change in diameter on the end of frame member **102** towards the driven load. In the illustrated example, frame member **102** includes a region **1106** of increased diameter, which may facilitates attachment of frame member **102** to a driven load.

Figure 11D is a sectional side view of another embodiment of frame member **102** where frame member **102** includes surface platings **1108** on both sides of frame member **102.** Surface platings **1108** may be made of conductive materials to provide grounding and/or electromagnetic shielding. In the illustrated example, surface platings **1108** circumferentially surround the inner and outer diameters of frame member **102** and may be used for shielding, grounding, or both.

According to the invention, a method according to claim 12 is disclosed.

A composite frame as described herein may be mated to the electrical machine that it encloses in any suitable manner. In one example, the stator of the electrical machine to the composite frame by interference fit. In another example, end supports of the electrical machine may be mated to the composite frame by adhesive bonding.

## Claims

1. An electrical machine (108) comprising a frame (100), wherein the electrical machine (108) comprises a motor or a generator including a stator, the stator including stator laminations (110) and stator windings (112), the frame comprising:
an outer frame member, the outer frame member (102) forming a central aperture (106) for holding the electrical machine (108), the outer frame member (102) forming an outermost layer of the portion of the frame for surrounding the electrical machine (108) and extending axially beyond the stator laminations (110) of the electrical machine; and
an attachment mechanism (104) formed on at least one end of the outer frame member for attaching the outer frame member to a mechanical system,
wherein the outer frame member (102) is fastened to the stator of the electrical machine (108), **characterized in that** the frame is a composite frame comprising a composite material including fibers having an aspect ratio of at least 1500.

2. The electrical machine (108) of claim 1 wherein the fibers comprise filament wound fibers, or
wherein the fibers comprise pultruded fibers, or
wherein the fibers are encapsulated within the outer shell by one of:
extrusion, resin transfer molding, or vacuum infusion, or
wherein the fibers comprise a non-conductive material, or
wherein the fibers comprise a non-conductive layer of material between the stator laminations and mechanically grounded surfaces of the electrical machine.

3. The electrical machine (108) of claim 1 wherein the outer frame member (102) surrounds the stator of the electrical machine (108).

4. The electrical machine (108) of claim 1, wherein the stator of the electrical machine (108) includes radially extending tooth structures formed on an outer surface of the stator.

5. The electrical machine (108) of claim 4 wherein the outer frame member (102) includes a faceted inner diameter for interlocking with facets (1000) on an outer diameter of the stator,
wherein outer frame member (102) preferably includes fins (1002) formed on an outer diameter of the outer frame member,
wherein the inner and outer diameters of the outer frame member are preferably formed of different materials or fiber orientations.

6. The electrical machine (108) of claim 1 wherein the outer frame member (102) includes a first inner diameter in a region of the outer frame member that is distal from a driven load and includes a second inner diameter greater than the first inner diameter in a region of the outer frame member proximal to the driven load.

7. The electrical machine (108) of claim 1 wherein the outer frame member (102) comprises a substantially cylindrical structure.

8. The electrical machine (108) of claim 1 wherein the attachment mechanism comprises a flange.

9. The electrical machine (108) of claim 1 wherein at least some of the fibers are axially oriented, or
wherein at least some of the fibers are oriented off axis.

10. The electrical machine (108) of claim 1 comprising at least one conductive surface plate (1108) for covering at least one circumferential surface of the outer frame member.

11. The electrical machine (108) according to any of the preceding claims, wherein at least a portion (108) of the electrical machine is located in the central aperture (106), wherein the outer frame member (102) extends axially beyond the stator laminations (110) of the electrical machine.

12. A method for making a stator with a composite frame (100) for an electrical machine (108), the electrical machine (108) comprising a motor or a generator, the stator including stator laminations (110) and stator windings (112), the method comprising:
providing mandrels (302);
placing a wound stator between the mandrels
incorporating fibers around the stator and mandrels, the fibers having an aspect ratio of at least 1500;
applying resin to the fibers; and
curing the resin to form an outer frame member (102) comprising composite materials including the fibers and the resin, the outer frame member (102) forming a central aperture for holding an electrical machine, the outer frame member forming an outermost layer of the composite frame (100) and extending axially beyond the stator laminations of the electrical machine (108).

13. The method of claim 12 comprising mating the stator of the electrical machine (108) to the composite frame (100) by interference fit , or mating end supports of the electrical machine (108) to the composite frame by adhesive bonding.

## Patentansprüche

1. Elektrische Maschine (108), umfassend einen Rahmen (100), wobei die elektrische Maschine (108) einen Motor oder einen Generator umfasst, der einen Stator enthält, wobei der Stator Statorlaminierungen (110) und Statorwindungen (112) umfasst, wobei der Rahmen umfasst:
ein äußeres Rahmenelement, wobei das äußere Rahmenelement (102) eine zentrale Öffnung (106) zum Halten der elektrischen Maschine (108) bildet, wobei das äußere Rahmenelement (102) eine äußerste Schicht des Abschnitts des Rahmens zum Umgebend der elektrischen Maschine (108) bildet und sich axial über die Statorlaminierungen (110) der elektrischen Maschine hinaus erstreckt; und
einen Befestigungsmechanismus (104), der an mindestens einem Ende des äußeren Rahmenelements zum Befestigen des äußeren Rahmenelements an einem mechanischen System ausgebildet ist,
wobei das äußere Rahmenelement (102) an dem Stator der elektrischen Maschine (108) befestigt ist,
**dadurch gekennzeichnet, dass** der Rahmen ein Verbundrahmen ist, der ein Verbundmaterial umfasst, das Fasern beinhaltet, die ein Längenverhältnis von mindestens 1500 aufweisen.

2. Elektrische Maschine (108) nach Anspruch 1, wobei die Fasern filamentgewickelte Fasern umfassen, oder
wobei die Fasern pultrudierte Fasern umfassen, oder
wobei die Fasern innerhalb der äußeren Hülle durch eines der folgenden Verfahren eingekapselt sind:
Extrusion, Harztransferformung oder Vakuuminfusion, oder
wobei die Fasern ein nichtleitendes Material umfassen, oder
wobei die Fasern eine nichtleitende Materialschicht zwischen den Statorlaminierungen und mechanisch geerdeten Oberflächen der elektrischen Maschine umfassen.

3. Elektrische Maschine (108) nach Anspruch 1, wobei das äußere Rahmenelement (102) den Stator der elektrischen Maschine (108) umgibt.

4. Elektrische Maschine (108) nach Anspruch 1, wobei der Stator der elektrischen Maschine (108) radial verlaufende Zahnstrukturen enthält, die auf einer äußeren Oberfläche des Stators ausgebildet sind.

5. Elektrische Maschine (108) nach Anspruch 4, wobei das äußere Rahmenelement (102) einen facettierten Innendurchmesser zur Verzahnung mit Facetten (1000) an einem Außendurchmesser des Stators beinhaltet,
wobei das äußere Rahmenelement (102) vorzugsweise Rippen (1002) beinhaltet, die an einem Außendurchmesser des äußeren Rahmenelements ausgebildet sind,
wobei der Innen- und der Außendurchmesser des äußeren Rahmenelements vorzugsweise aus unterschiedlichen Materialien oder Faserorientierungen gebildet sind.

6. Elektrische Maschine (108) nach Anspruch 1, wobei das äußere Rahmenelement (102) einen ersten Innendurchmesser in einem Bereich des äußeren Rahmenelements beinhaltet, der von einer angetriebenen Last entfernt ist, und einen zweiten Innendurchmesser beinhaltet, der größer als der erste Innendurchmesser in einem Bereich des äußeren Rahmenelements ist, der proximal zu der angetriebenen Last ist.

7. Elektrische Maschine (108) nach Anspruch 1, wobei das äußere Rahmenelement (102) eine im Wesentlichen zylindrische Struktur umfasst.

8. Elektrische Maschine (108) nach Anspruch 1, wobei der Befestigungsmechanismus einen Flansch umfasst.

9. Elektrische Maschine (108) nach Anspruch 1, wobei zumindest einige der Fasern axial ausgerichtet sind, oder
wobei mindestens einige der Fasern außeraxial ausgerichtet sind.

10. Elektrische Maschine (108) nach Anspruch 1, umfassend mindestens eine leitende Oberflächenplatte (1108) zum Abdecken mindestens einer Umfangsfläche des äußeren Rahmenelements.

11. Elektrische Maschine (108) nach einem der vorhergehenden Ansprüche, wobei zumindest ein Teil (108) der elektrischen Maschine in der zentralen Öffnung (106) angeordnet ist, wobei sich das äußere Rahmenelement (102) axial über die Statorlaminierungen (110) der elektrischen Maschine hinaus erstreckt.

12. Verfahren zur Herstellung eines Stators mit einem Verbundrahmen (100) für eine elektrische Maschine (108), wobei die elektrische Maschine (108) einen Motor oder einen Generator umfasst,
wobei der Stator Statorlaminierungen (110) und Statorwicklungen (112) umfasst, wobei das Verfahren umfasst:
Bereitstellen von Dornen (302);
Anordnen eines gewickelten Stators zwischen den Dornen, wobei Fasern um den Stator und die Dorne herum eingebaut werden, wobei die Fasern ein Längenverhältnis von mindestens 1500 aufweisen;
Auftragen von Harz auf die Fasern; und
Aushärten des Harzes, um ein äußeres Rahmenelement (102) zu bilden, das Verbundmaterialien umfasst, die die Fasern und das Harz beinhalten, wobei das äußere Rahmenelement (102) eine zentrale Öffnung zum Halten einer elektrischen Maschine bildet,
wobei das äußere Rahmenelement eine äußerste Schicht des Verbundrahmens (100) bildet und sich axial über die Statorlaminierungen der elektrischen Maschine (108) hinaus erstreckt.

13. Verfahren nach Anspruch 12 umfasst das Verbinden des Stators der elektrischen Maschine (108) mit dem Verbundrahmen (100) durch Presspassung oder das Verbinden von Endstützen der elektrischen Maschine (108) mit dem Verbundrahmen durch Klebeverbindung.

## Revendications

1. - Machine électrique (108) comprenant un châssis (100), la machine électrique (108) comprenant un moteur ou un générateur comprenant un stator, le stator comprenant des tôles de stator (110) et des enroulements de stator (112), le châssis comprenant :
un élément de châssis extérieur, l'élément de châssis extérieur (102) formant une ouverture centrale (106) pour maintenir la machine électrique (108), l'élément de châssis extérieur (102) formant une couche la plus extérieure de la partie du châssis pour entourer la machine électrique (108) et s'étendant axialement au-delà des tôles de stator (110) de la machine électrique ; et
un mécanisme de fixation (104) formé sur au moins une extrémité de l'élément de châssis extérieur pour fixer l'élément de châssis extérieur à un système mécanique,
l'élément de châssis extérieur (102) étant fixé au stator de la machine électrique (108),
**caractérisée par le fait que** le châssis est un châssis composite comprenant un matériau composite incluant des fibres ayant un rapport d'aspect d'au moins 1500.

2. - Machine électrique (108) selon la revendication 1, dans laquelle les fibres comprennent des fibres d'enroulement filamentaire, ou
dans laquelle les fibres comprennent des fibres de pultrusion, ou
dans laquelle les fibres sont encapsulées à l'intérieur de l'enveloppe extérieure par l'un parmi : extrusion, moulage par transfert de résine ou infusion sous vide, ou
dans laquelle les fibres comprennent un matériau non-conducteur, ou
dans laquelle les fibres comprennent une couche non-conductrice de matériau entre les tôles de stator et des surfaces mécaniquement mises à la terre de la machine électrique.

3. - Machine électrique (108) selon la revendication 1, dans laquelle l'élément de châssis extérieur (102) entoure le stator de la machine électrique (108) .

4. - Machine électrique (108) selon la revendication 1, dans laquelle le stator de la machine électrique (108) comprend des structures de dent s'étendant radialement formées sur une surface extérieure du stator.

5. - Machine électrique (108) selon la revendication 4, dans laquelle l'élément de châssis extérieur (102) comprend un diamètre intérieur à facettes pour un verrouillage mutuel avec des facettes (1000) sur un diamètre extérieur du stator,
dans laquelle l'élément de châssis extérieur (102) comprend de préférence des ailettes (1002) formées sur un diamètre extérieur de l'élément de châssis extérieur,
dans laquelle les diamètres intérieur et extérieur de l'élément de châssis extérieur sont de préférence formés de différents matériaux ou de différentes orientations de fibres.

6. - Machine électrique (108) selon la revendication 1, dans laquelle l'élément de châssis extérieur (102) comprend un premier diamètre intérieur dans une région de l'élément de châssis extérieur qui est distale par rapport à une charge entraînée et comprend un second diamètre intérieur supérieur au premier diamètre intérieur dans une région de l'élément de châssis extérieur proximale par rapport à la charge entraînée.

7. - Machine électrique (108) selon la revendication 1, dans laquelle l'élément de châssis extérieur (102) comprend une structure sensiblement cylindrique.

8. - Machine électrique (108) selon la revendication 1, dans laquelle le mécanisme de fixation comprend une bride.

9. - Machine électrique (108) selon la revendication 1, dans laquelle au moins une partie des fibres est orientée axialement, ou
dans laquelle au moins une partie des fibres est orientée hors axe.

10. - Machine électrique (108) selon la revendication 1, comprenant au moins une plaque de surface conductrice (1108) pour recouvrir au moins une surface périphérique de l'élément de châssis extérieur.

11. - Machine électrique (108) selon l'une quelconque des revendications précédentes, dans laquelle au moins une partie (108) de la machine électrique est située dans l'ouverture centrale (106), et dans laquelle l'élément de châssis extérieur (102) s'étend axialement au-delà des tôles de stator (110) de la machine électrique.

12. - Procédé de fabrication d'un stator ayant un châssis composite (100) pour une machine électrique (108), la machine électrique (108) comprenant un moteur ou un générateur, le stator comprenant des tôles de stator (110) et des enroulements de stator (112), le procédé comprenant :
fournir des mandrins (302) ;
placer un stator enroulé entre les mandrins ;
incorporer des fibres autour du stator et des mandrins, les fibres ayant un rapport d'aspect d'au moins 1500 ;
appliquer de la résine sur les fibres ; et
faire durcir la résine pour former un élément de châssis extérieur (102) comprenant des matériaux composites incluant les fibres et la résine, l'élément de châssis extérieur (102) formant une ouverture centrale pour maintenir une machine électrique, l'élément de châssis extérieur formant une couche la plus extérieure du châssis composite (100) et s'étendant axialement au-delà des tôles de stator de la machine électrique (108).

13. - Procédé selon la revendication 12, comprenant le couplage du stator de la machine électrique (108) au châssis composite (100) par ajustement serré, ou le couplage de supports d'extrémité de la machine électrique (108) au châssis composite par liaison adhésive.
